# EUROPEAN PATENT APPLICATION

(11) **EP 4 687 275 A1**
(43) Date of publication of application: **04.02.2026**
(21) Application number: 25156985.1
(22) Date of filing: 11.02.2025
(51) Int. Cl.: H02M 1/10, H02M 3/335, H02M 3/156, H02M 5/458, H02M 7/217, H02M 7/5387, H02M 1/42, H02J 1/10, H02J 9/06, H02P 5/60

(54) **MULTI-MOTOR INTEGRATED POWER CIRCUIT, MOTOR POWER CONTROL METHOD AND ELECTRONIC DEVICE**

(30) Priority: 29.07.2024 CN 202411024680
(71) Applicant: Shenzhen Megmeet Electrical Co., Ltd., Shenzhen, Guangdong 518057 (CN); Hunan Megmeet Electrical Technology Co., Ltd, Changsha Hunan Province 410141 (CN)
(72) Inventor: LI, Xiaobing, Shenzhen (CN); ZHANG, Liangshuang, Shenzhen (CN)
(74) Representative: Gong, Jinping

(57) **Abstract**

The embodiments of this application relate to a multi-motor integrated power circuit, a motor power control method and an electronic device; a power input conversion circuit converts a power input signal from a standby power source to a busbar power signal; a power factor correction circuit converts and superposes an AC input signal of the AC power source to/with the busbar power signal; a first isolation circuit converts the busbar power signal to an isolation output signal; a first switch sub-circuit converts the busbar power signal to a first AC signal; an isolation transformer converts the first AC signal to two or more second AC signals; a first power conversion circuit or an isolation transformer converts the isolation output signal or the second AC signal to a DC drive signal; a second power conversion circuit converts the isolation output signal or the second AC signal to an AC drive signal.

## Description

The present application claims the benefit of priority to Chinese Patent Application No. 202411024680.0, filed on July 29, 2024, which is hereby incorporated by reference in its entirety.

### TECHNICAL FIELD

The embodiments of this application relate to a power technology field, and more particularly, to a multi-motor integrated power circuit, a motor power control method and an electronic device.

### TECHNICAL BACKGROUND

At present, there are different requirements for the power sources to meet the different load power characteristics of application devices of motor power sources. Generally, a common motor power source is an integral motor drive system formed by an independent rectification module and a drive module.

Every module has independent circuits which shall be controlled separately. Therefore, the whole drive system has a complex structure low efficiency and low reliability. In addition, the main devices may not operate stably and reliably in power failure.

### SUMMARY

The embodiments of this application provide a multi-motor integrated power circuit, a motor power control method and an electronic device which can solve the problem that the drive systems of multi-motor integrated power circuits in prior art have complex structures, low efficiency and low reliability, and the main devices may not operate stably and reliably in power failure.

A technical scheme of the application for solving the above technical problems is to provide a multi-motor integrated power circuit, wherein, the multi-motor integrated power circuit includes: a standby power source; a busbar; a power input conversion circuit coupled between the standby power source and the busbar to receive a power input signal from the standby power source, convert the power input signal to a busbar power signal and output the busbar power signal to the busbar; a power factor correction circuit coupled with the busbar and for coupling with an AC power source to receive an AC input signal from the AC power source and convert and superpose the AC input signal to/with the busbar power signal; a first isolation circuit coupled with the busbar; a second isolation circuit which includes a first switch sub-circuit and an isolation transformer, of which the isolation transformer includes one piece of primary winding and two or more pieces of secondary winding coupled with the primary winding and the first switch sub-circuit is coupled with the busbar and the primary winding; a first power conversion circuit(s) of which every first power conversion circuit is coupled with the first isolation circuit or one piece of secondary winding and for coupling with a DC motor; a second power conversion circuit(s) of which every second power conversion circuit is coupled with the first isolation circuit or one piece of secondary winding and for coupling with an AC motor; a control circuit coupled with the power input conversion circuit, the power factor correction circuit, the first switch sub-circuit, every first power conversion circuit and every second power conversion circuit; wherein, the first isolation circuit receives a first drive signal from the control circuit and converts the busbar power signal to an isolation output signal based on the first drive signal; every first switch sub-circuit receives the busbar power signal from the busbar and a second drive signal from the control circuit, and converts the busbar power signal to a first AC signal based on the second drive signal; the primary winding receives the first AC signal from the first switch sub-circuit, and two or more pieces of secondary winding convert the first AC signal to two or more second AC signals; every first power conversion circuit receives the isolation output signal from the first isolation circuit or the second AC signal from every piece of secondary winding, converts the isolation output signal or the second AC signal to a DC drive signal and outputs the DC drive signal to the DC motor; every second power conversion circuit receives the isolation output signal from the first isolation circuit or the second AC signal from every piece of secondary winding, converts the isolation output signal or the second AC signal to an AC drive signal and outputs the AC drive signal to the AC motor.

Wherein, the control circuit obtains the busbar power signal by sampling, regulates a first characteristic parameter of a first control signal based on the busbar power signal, and sends the first control signal to the power factor correction circuit to regulate the busbar power signal based on the first control signal; the control circuit regulates a second characteristic parameter of a second control signal based on the regulated busbar power signal and sends the second control signal to the power input conversion circuit to regulate the busbar power signal based on the second control signal; wherein, the control circuit regulates the busbar power signal based on the first control signal and the second control signal in turns to limit the busbar power signal within a first threshold range; the control circuit obtains the AC input signal by sampling, regulates a third characteristic parameter of a third control signal based on the AC input signal, and sends the third control signal to the power factor correction circuit to regulate the busbar power signal based on the third control signal; wherein, the control circuit sends the third control signal to the power factor correction circuit with a higher priority than sending the first control signal; and the control circuit obtains the power input signal by sampling, regulates a fourth characteristic parameter of a fourth control signal based on the power input signal, and sends the fourth control signal to the power input conversion circuit to regulate the busbar power signal based on the fourth control signal; wherein, the control circuit sends the third control signal to the power factor correction circuit with a higher priority than sending the fourth control signal to the power input conversion circuit and the control circuit sends the fourth control signal to the power input conversion circuit with a higher priority than sending the second control signal.

Wherein, the control circuit regulates a fifth characteristic parameter of a fifth control signal based on the difference between the busbar power signal current and the AC input signal current, and sends the fifth control signal to the power factor correction circuit to regulate the busbar power signal current based on the fifth control signal; and the control circuit regulates a sixth characteristic parameter of a sixth control signal based on the difference between the busbar power signal current and the power input signal current, and sends the sixth control signal to the power input conversion circuit to regulate the busbar power signal current based on the sixth control signal.

Wherein, the second power conversion circuit also includes a second switch sub-circuit and an inverter circuit; the second switch sub-circuit is coupled with the inverter circuit and the first isolation circuit or the secondary winding; the inverter circuit is for coupling with the AC motor; wherein, the second switch sub-circuit receives a third drive signal from the control circuit and the isolation output signal from the first isolation circuit or the second AC signal from the secondary winding, and converts the isolation output signal or the second AC signal to a second DC signal based on the third drive signal; the inverter circuit receives the second DC signal from the second switch sub-circuit and a fourth drive signal from the control circuit and converts the second DC signal to the AC drive signal based on the fourth drive signal.

Wherein, the first switch sub-circuit includes a first capacitor, a first switching tube, a second switching tube, a third switching tube, a fourth switching tube, a second capacitor and a first inductor; the second switch sub-circuit includes a fifth switching tube, a sixth switching tube, a seventh switching tube, an eighth switching tube, a second inductor and a third capacitor; wherein, the first end of the first capacitor is coupled with the first end of the busbar, the first end of the first switching tube and the first end of the second switching tube, the second end of the first capacitor is coupled with the second end of the busbar, the second end of the third switching tube and the second end of the fourth switching tube, the second end of the first switching tube is coupled with the first end of the third switching tube and the first end of the second capacitor, the second end of the second switching tube is coupled with the first end of the fourth switching tube and the second end of the primary winding, the second end of the second capacitor is coupled with the first end of the first inductor, and the second end of the first inductor is coupled with the first end of the primary winding; the second end of the fifth switching tube is coupled with the first end of the seventh switching tube, the first end of the first isolation circuit or the first end of the secondary winding, the second end of the sixth switching tube is coupled with the first end of the eighth switching tube, the first end of the first isolation circuit or the second end of the secondary winding, the first end of the fifth switching tube is coupled with the first end of the second inductor, the second end of the second inductor is coupled with the first end of the sixth switching tube, the first end of the third capacitor and the first end of the inverter circuit, the second end of the seventh switching tube is coupled with the second end of the eighth switching tube, the second end of the third capacitor and the second end of the inverter circuit; the third ends of the first switching tube, the second switching tube, the third switching tube, the fourth switching tube, the fifth switching tube, the sixth switching tube, the seventh switching tube and the eighth switching tube are coupled with the control circuit.

Wherein, the power factor correction circuit includes a second inductor, a third inductor, a fifth switching tube, a sixth switching tube, a seventh switching tube, an eighth switching tube, a first polar tube, a second polar tube and a third capacitor; wherein, the first end of the second inductor is coupled with the first end of the third inductor and the first end of the AC power source, the second end of the second inductor is coupled with the second end of the fifth switching tube and the first end of the seventh switching tube, the second end of the third inductor is coupled with the second end of the sixth switching tube and the first end of the eighth switching tube, the first end of the first polar tube is coupled with the second end of the second polar tube and the second end of the AC power source, the first end of the fifth switching tube is coupled with the first end of the sixth switching tube, the second end of the first polar tube and the first end of the third capacitor, the second end of the seventh switching tube is coupled with the second end of the eighth switching tube, the first end of the second polar tube and the second end of the third capacitor, and the third end of the seventh switching tube and the third end of the eighth switching tube are coupled with the control circuit.

Another technical scheme of the application for solving the above technical problems is to provide a motor power control method, wherein, the motor power control method includes: receiving the AC input signal from the AC power source; converting the AC input signal to the busbar power signal; converting and superposing the power input signal to/with the busbar power signal; converting the busbar power signal to the isolation output signal based on the first drive signal; or, converting the busbar power signal to the first AC signal based on the second drive signal; converting the first AC signal to two or more second AC signals; converting the isolation output signal or the second AC signals to the DC drive signal and outputting the DC drive signal to the DC motor; and converting the isolation output signal or the second AC signals to the AC drive signal and outputting the AC drive signal to the AC motor.

Wherein, a step after converting and superposing the power input signal to/with the busbar power signal and before converting the busbar power signal to the isolation output signal based on the first drive signal also includes: regulating the busbar power signal based on the first control signal and the second control signal in turns to limit the busbar power signal within the first threshold range; wherein, the step of regulating the busbar power signal based on the first control signal and the second control signal includes: regulating the first characteristic parameter of the first control signal based on the busbar power signal; regulating the second characteristic parameter of the second control signal based on the regulated busbar power signal; regulating the fifth characteristic parameter of the fifth control signal based on the difference between the busbar power signal current and the AC input signal current; regulating the busbar power signal current based on the fifth control signal; regulating the sixth characteristic parameter of the sixth control signal based on the difference between the busbar power signal current and the power input signal current; and regulating the busbar power signal current based on the sixth control signal.

Wherein, the step of converting the isolation output signal or the second AC signal to the AC drive signal includes: converting the isolation output signal or the second AC signal to the second DC signal based on the second drive signal; and converting the second DC signal to the AC drive signal based on the fourth control signal.

Another technical scheme of the application for solving the above technical problems is to provide an electronic device, wherein, the electronic device includes a shell and a multi-motor integrated power circuit; wherein, the multi-motor integrated power circuit is the one in any of above multi-motor integrated power circuits.

The beneficial effects of this application are that different from the prior art, the power input conversion circuit of the multi-motor integrated power circuit in this application converts the power input signal from the standby power source to the busbar power signal; the power factor correction circuit converts and superposes the AC input signal from the AC power source to/with the busbar power signal; the first isolation circuit converts the busbar power signal to the isolation output signal; the first switch sub-circuit converts the busbar power signal to the first AC signal; the isolation transformer converts the first AC signal to two or more second AC signals; the first power conversion circuit or the isolation transformer converts the isolation output signal or the second AC signal to the DC drive signal and outputs the DC drive signal to the DC motor; the second power conversion circuit converts the isolation output signal or the second AC signal to the AC drive signal and outputs the AC drive signal to the AC motor. These circuits are integrated in one module and the power factor correction circuit and the control circuit are multiplexed, which effectively simplifies system hardware circuits and improves reliability of drive control and power supply. In addition, the centralized control strategy reduces the control delay, improves the control precision, simplifies the circuit structures and reduces the system costs. The standby power source and the AC power source are combined into a composite power source, and are controlled by the power input conversion circuit and the power factor correction circuit in a unified way, which effectively reduces the system failure rate and improves the system reliability. Therefore, motor loads can work stably and reliably to meet the high reliability power demand of key motor loads in outage, failure or missing of the AC power source, such as in an open country or field environment. Furthermore, compared with the structure that every motor load is equipped with an independent isolation transformer, the multi-winding transformer for similar motor loads further improves the integration degree of the multi-motor integrated power circuit and simplifies the drive control of the control circuit. The isolation transformer realizes electrical isolation and voltage matching on primary and secondary sides to meet relevant insulation requirements in safety regulation.

### BRIEF DESCRIPTION OF DRAWINGS

To provide a clearer explanation of the technical schemes in the embodiments of this application, a brief introduction will be given to the drawings required in the description of the embodiments. Obviously, the drawings in the following description are only some embodiments of the application. The persons skilled in the art can obtain other drawings based on these drawings without putting in creative labor. Wherein:
FIG. 1 illustrates a structural schematic diagram of the first embodiment of the multi-motor integrated power circuit in this application;
FIG. 2 illustrates a structural schematic diagram of the second embodiment of the multi-motor integrated power circuit in this application;
FIG. 3 illustrates a structural schematic diagram of an embodiment of the first switch sub-circuit of the multi-motor integrated power circuit in FIG. 2;
FIG. 4 illustrates a structural schematic diagram of the first embodiment of the power factor correction circuit of the multi-motor integrated power circuit in FIG. 2;
FIG. 5 illustrates a structural schematic diagram of the second embodiment of the power factor correction circuit of the multi-motor integrated power circuit in FIG. 2;
FIG. 6 illustrates a structural schematic diagram of the third embodiment of the power factor correction circuit of the multi-motor integrated power circuit in FIG. 2;
FIG. 7 illustrates a structural schematic diagram of the fourth embodiment of the power factor correction circuit of the multi-motor integrated power circuit in FIG. 2;
FIG. 8 illustrates a structural schematic diagram of an embodiment of the second switch sub-circuit of the multi-motor integrated power circuit in FIG. 2;
FIG. 9 illustrates a structural schematic diagram of an embodiment of the inverter circuit of the multi-motor integrated power circuit in FIG. 2;
FIG. 10 illustrates a process diagram of the first embodiment of the motor power control method in this application;
FIG. 11 illustrates a process diagram of an embodiment of S37 in FIG. 10;
FIG. 12 illustrates a process diagram of the second embodiment of the motor power control method in this application;
FIG. 13 illustrates a framework diagram of an embodiment of the electronic device in this application.

### DETAILED DESCRIPTION

The following will provide a clear and complete description of the technical schemes of the embodiments in this application by combining with the drawings. Obviously, the described embodiments are only a portion of the embodiments in this application, and not all. Based on the embodiments in this application, all other embodiments obtained by the persons skilled in the art without putting in creative labor are within the protection scope of this application.

In this application, the terms "first", "second" and "third" are only for description and may not be understood as indicating or implying relative importance or implying the number of technical features. Therefore, the "first", "second" and "third" features can explicitly or implicitly include one or more features. In the description of this application, the term "a plurality of" means two or more, unless otherwise specified. In addition, the terms "include", "comprise" and any other variants are intended to covering non-exclusive inclusion. For example, a series of steps or units included in a process, a method, a system, a product or a device are not limited to the listed steps or units, but in some embodiments, may include steps or units that are not listed, or may include other steps or units inherent to the process, the method, the product or the device.

The term "embodiment" in this application means that specific features, structures or characteristics described by combining the embodiments may be included in one or more embodiments in this application. The term "embodiment" in different positions in the specifications is not necessarily the same embodiment, nor an independent or alternative embodiment that is exclusive with other embodiments. Persons skilled in the art explicitly and implicitly understand that the embodiments in this application may be combined with other embodiments.

A detailed explanation of this application will be provided in combining with the drawings and embodiments as follow.

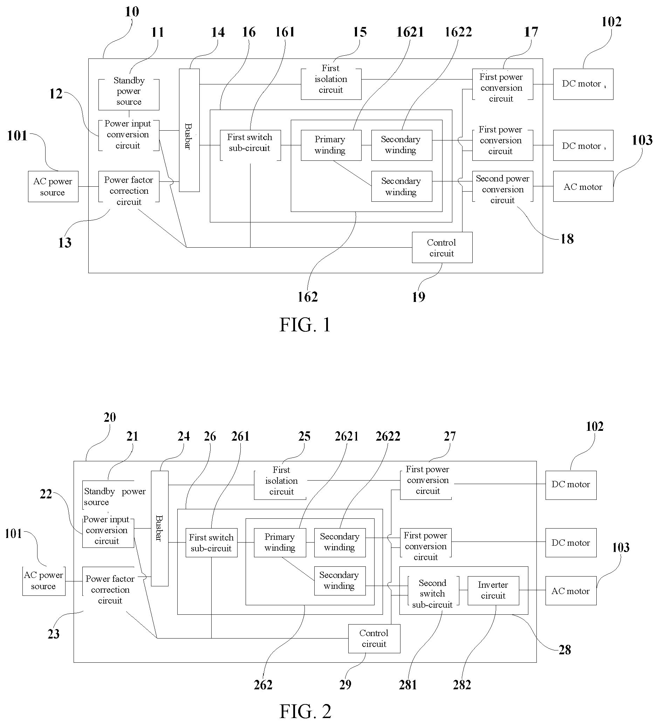

Referring to FIG. 1, FIG. 1 illustrates a structural schematic diagram of the first embodiment of the multi-motor integrated power circuit in this application. In this embodiment, specifically, the multi-motor integrated power circuit 10 includes: a standby power source 11, a power input conversion circuit 12, a power factor correction circuit 13, a busbar 14, a first isolation circuit 15, a second isolation circuit 16, a first power conversion circuit(s) 17, a second power conversion circuit(s) 18 and a control circuit 19.

Wherein, the multi-motor integrated power circuit 10 in this application is applied in the power supply for two or more motor loads, such as a DC motor 102, a single-phase AC motor 103 and/or a three-phase AC motor 103, obtains power from a grid and/or the standby power source 11, converts and regulates the power and provides to these motor loads so as to drive these motor loads to work.

In some embodiments, the standby power source 11 is used as a standby power source to provide uninterrupted power supply in main power outage or maintenance to maintain the continuous operation, and thereby ensure the service continuity. Specifically, the standby power source 11 may be one of any reasonable independent power sources, such as an UPS, a battery, an oil engine generator, a PV cell and a wind-driven generator. There is no relevant limitation in this application.

Wherein, the power input conversion circuit 12 is bridged between the standby power source 11 and the busbar 14 (or called main power cord) to ensure the stability and redundancy of the power source. The power input conversion circuit 12 receives a power input signal from the standby power source 11, converts the power input signal to a busbar power signal by many regulation methods, such as voltage regulation, current conversion, frequency adjustment, filtering, rectification and smoothing processing, and outputs the converted power signal to the busbar 14.

The power factor correction circuit 13 is coupled with the busbar 14 and is for coupling with an AC power source 101 to receive an AC input signal from the AC power source 101, converts the AC input signal to a busbar power signal by electronic control technologies and outputs the busbar power signal to the busbar 14 to superpose with the busbar power signal of the busbar 14 provided by the power input conversion circuit 12.

It is worth noting that the AC power source 101 may be understood as a power grid AC power source or a power regulation circuit which converts and regulates the grid power to obtain AC power output.

Besides, the term "coupling" in this application refers to any direct and indirect means of connection. Therefore, the description that the first circuit is coupled with the second circuit in the application means that the first circuit may be directly connected with the second circuit by electrical connection or signal connection such as wireless transmission and optical transmission, or indirectly connected with the second circuit through other circuits or connection means by electrical connection or signal connection.

Wherein, the busbar 14 may be understood as a central point of power distribution in the system, and distributes the converted power to different sub-systems or components to ensure the power demand of the whole device, i.e. specifically, the busbar 14 collects the signals from different power sources and then distributes the signals to different back-end circuits.

Further, the first isolation circuit 15 is coupled with the busbar14; the second isolation circuit 16 includes a first switch sub-circuit 161 and an isolation transformer 162, and the isolation transformer 162 includes a piece of primary winding 1621 and two or more pieces of secondary winding 1622; the first switch sub-circuit 161 is coupled with the busbar 14 and the primary winding 1621, and two or more pieces of secondary winding 1622 are coupled with and electrically isolated with the primary winding 1621 to prevent direct electrical connection between a primary circuit and a secondary circuit, which improves the system safety, especially improves the safety between a high voltage circuit and a low voltage circuit, or between an interference sensitive circuit and a noisy power circuit. Besides, two or more pieces of secondary winding 1622 also may have different turns ratios to convert the power of the primary side to outputs at different voltage levels so as to meet the voltage requirements of different loads.

The first power conversion circuit(s) 17 may be one or more, and every first power conversion circuit 17 is coupled with the first isolation circuit 15 or one piece of secondary winding 1622, and is for coupling with the DC motor 102.

The second power conversion circuit(s) 18 may be one or more, and every second power conversion circuit 18 is coupled with the first isolation circuit 15 or one piece of secondary winding 1622, and is for coupling with the AC motor 103.

In some embodiments, when the first power conversion circuits 17 are two or more, the DC motors 102 coupled with the first power conversion circuits 17 may be the same or different to connect with the secondary winding 1622 with the same or different turns ratios; when the second power conversion circuits 18 are two or more, the AC motors 103 coupled with the second power conversion circuits 18 may be the same or different, and specifically, may be single-phase AC motors 103 and/or three-phase AC motors. There is no relevant limitation in this application.

It is worth noting that every first power conversion circuit 17 is a DC chopper circuit, i.e. a rectifier circuit, such as a full-bridge rectifier circuit, a half-bridge rectifier circuit, a full-wave rectifier circuit or any other reasonable circuits to realize current conversion from DC to DC, to meet the drive demands of the DC motor 102 in different working conditions. There is no relevant limitation in this application.

Besides, every second power conversion circuit 18 is an inverter circuit, i.e. a full-bridge inverter circuit, a symmetric half-bridge circuit, an asymmetric half-bridge circuit or any other reasonable circuits to realize current conversion from DC to AC. In addition, one of any following reasonable drive control strategies, i.e. SVPWM, SPWM, DTC or FOC, is used to regulate and control current, voltage and frequency of converting from DC to AC to meet the drive demands of the AC motor 103 in different working conditions, realizing efficiency speed regulation and control of the motor.

The control circuit 19 is coupled with the power input conversion circuit 12, the power factor correction circuit 13, the first switch sub-circuit 161, every first power conversion circuit 17 and every second power conversion circuit 18.

Wherein, the first isolation circuit 15 receives a first drive signal from the control circuit 19, and changes the switch state under the action of the first drive signal to convert the busbar power signal to an isolation output signal.

Every first switch sub-circuit 161 receives the busbar power signal from the busbar 14 and a second drive signal from the control circuit 19, and changes the switch state under the action of the second drive signal to convert the busbar power signal to a first AC signal.

The primary winding 1621 of the isolation transformer 162 receives the first AC signal from the first switch sub-circuit 161; two or more pieces of secondary winding 1622 convert the first AC signal to corresponding two or more second AC signals by electromagnetic induction.

When coupling with the first isolation circuit 15, the first power conversion circuit 17 receives the isolation output signal from the first isolation circuit 15, converts the isolation output signal to a DC drive signal, and outputs the DC drive signal to the DC motor 102; when coupling with one piece of secondary winding 1622 of the isolation transformer 162, the first power conversion circuit 17 receives the second AC signal from the secondary winding 1622, converts the second AC signal to a DC drive signal, and outputs the DC drive signal to the DC motor 102 to drive the DC motor 102 to work.

Similarly, when coupling with the first isolation circuit 15, the second power conversion circuit 18 receives the isolation output signal from the first isolation circuit 15, converts the isolation output signal to an AC drive signal, and outputs the AC drive signal to the AC motor 103; when coupling with one piece of secondary winding 1622 of the isolation transformer 162, the second power conversion circuit 18 receives the second AC signal from the secondary winding 1622, converts the second AC signal to the AC drive signal, and outputs the AC drive signal to the AC motor 103 to drive the AC motor 103 to work.

It is worth noting that the first power conversion circuit 17 and the second power conversion circuit 18 may be coupled with the first isolation circuit 15 or the secondary winding 1622 according to any reasonable power supply scenarios, such as the type or the importance of the motor load coupled with them. For example, a first power conversion circuit 17 and/or a second power conversion circuit 18 coupled with the DC motor 102 are/is coupled with the first isolation circuit 15, while other first power conversion circuit(s) 17 and/or other second power conversion circuit(s) 18 are/is coupled with the secondary winding 1622 of the isolation transformer 162; or, a first power conversion circuit 17 and/or a second power conversion circuit 18 coupled with important motor loads which are independently powered, such as a DC motor 102 and or an AC motor 103, are/is coupled with the first isolation circuit 15, and other first power conversion circuit 17 and/or other second power conversion circuit 18 are/is coupled with the secondary winding 1622 of the isolation transformer 162. There is no relevant limitation in this application.

In above scheme, different circuits are integrated in one module, and the power factor correction circuit 13 and the control circuit 19 are multiplexed, which effectively simplifies system hardware circuits and improves reliability of drive control and power supply. In addition, the centralized control strategy reduces the control delay, improves the control precision, simplifies the circuit structures and reduces the system costs. The standby power source 11 and the AC power source 101 are combined into a composite power source, and are controlled by the power input conversion circuit 12 and the power factor correction circuit 13 in a unified way, which effectively reduces the system failure rate and improves the system reliability. Therefore, motor loads can work stably and reliably to meet the high reliability power demand of key motor loads in outage, failure or missing of the AC power source 101, such as in an open country or field environment. Furthermore, compared with the structure that every motor load is equipped with an independent isolation transformer 162, the multi-winding transformer for similar motor loads further improves the integration degree of the multi-motor integrated power circuit 10 and simplifies the drive control of the control circuit 19. The isolation transformer 162 realizes electrical isolation and voltage matching on primary and secondary sides to meet relevant insulation requirements in safety regulation.

In an embodiment, the control circuit 19 obtains the busbar power signal from the busbar 14 by sampling and regulates a first characteristic parameter of a first control signal of the power factor correction circuit 13 based on the busbar power signal; the power factor correction circuit 13 regulates the switch states of all internal switching tubes and/or switching contacts under the action of the first control signal to regulate the current output of the power factor correction circuit 13 so as to regulate the busbar power signal.

Further, the control circuit 19 also obtains the busbar power signal regulated by the power factor correction circuit 13 by sampling, calculates and regulates a second characteristic parameter of a second control signal of the power input conversion circuit 12 based on the real-time data of the regulated busbar power signal; the power input conversion circuit 12 regulates the switch states of all internal switching tubes and/or switching contacts under the action of the second control signal to regulate the current output of the power input conversion circuit 12 so as to regulate the busbar power signal again.

Wherein, the control circuit 19 dynamic regulates the busbar power signal based on the first control signal and the second control signal in turns to limit voltage and/or current and/or frequency of the busbar power signal within a first threshold range to meet the drive demands of motor loads in different working conditions.

It should be understood that the first threshold range is a reasonable voltage and/or current and/or frequency range set to prevent rear-end circuits from damage in over-voltage or over-current conditions and maintain efficiency and stability of the system. When the busbar power signal is beyond the first threshold range, the control circuit 19 regulates the switch states of the power factor correction circuit 13 and the power input conversion circuit 12 based on the first control signal and the second control signal to regulate the busbar power signal to the value within the first threshold range.

The control circuit 19 sends the first control signal with a higher priority than sending the second control signal; when the busbar power signal is beyond the first threshold range, firstly, the control circuit 19 sends the first control signal to the power factor correction circuit 13 to regulate the busbar power signal, and judges whether the regulated busbar power signal is within the first threshold range; if yes, the control circuit 19 doesn't send the second control signal; if no, the control circuit 19 sends the second control signal to the power input conversion circuit 12 to regulate the busbar power signal again; the control circuit 19 judges whether the current busbar power signal is within the first threshold range; if yes, the regulation of the busbar power signal is finished; if not, the control circuit 19 sends the first control signal to the power factor correction circuit 13 again to regulate the busbar power signal, and so on. The control circuit 19 dynamically regulates the busbar power signal based on the first control signal and the second control signal in turns until the busbar power signal is within the first threshold range.

It should be noted that before sending the first control signal to the power factor correction circuit 13, specifically, the control circuit 19 also calculates and regulates the first characteristic parameter of the first control signal based on the obtained busbar power signal; similarly, before sending the second control signal to the power input conversion circuit 12, specifically, the control circuit 19 also calculates and regulates the second characteristic parameter of the second control signal based on the obtained busbar power signal.

In some embodiments, the first control signal and the second control signal may be one or more reasonable control signals, such as PWM signals or PFM signals. There is no relevant limitation in this application.

In some embodiments, specifically, the first characteristic parameter and the second characteristic parameter may be one or more reasonable parameters, such as duty cycle and frequency. The switch states of above switching tubes and/or switching contacts are corresponding to time ratio and/or switching frequency of ON and OFF. There is no relevant limitation in this application.

From this, it can be inferred that the control circuit 19 forms a closed-loop control system by real-time monitoring, analysis and sending and receiving instructions to ensure stable output of the busbar power signal of the busbar 14, optimize the overall voltage conversion efficiency and the power supply stability and enhance adaptability and reliability.

In some embodiments, the first threshold range is a voltage threshold range. The difference between the upper limit and the lower limit of the voltage threshold range is 6-12V, 10V is optimal, and the range is ± 5V of targeted voltage output of the busbar power signal. There is no relevant limitation in this application.

Further, the control circuit 19 also obtains the AC input signal from the power factor correction circuit 13 by sampling, calculates and regulates a third characteristic parameter of a third control signal sent to the power factor correction circuit 13 based on the AC input signal; the power factor correction circuit 13 regulates the switch states of all internal switching tubes and/or switching contacts under the action of the third control signal to regulate the current output of the power factor correction circuit 13 so as to regulate the busbar power signal.

Wherein, the control circuit 19 sends the third control signal to the power factor correction circuit 13 with a higher priority than sending the first control signal, i.e. when the control circuit 19 obtains the AC input signal and the busbar power signal at the same time, specifically, the control circuit 19 regulates the third characteristic parameter of the third control signal based on the AC input signal and sends the third control signal to the power factor correction circuit 13 instead of sending the first control signal to the power factor correction circuit 13. Therefore, the control circuit 19 can regulate the busbar power signal to the value within the first threshold range by responding to the change of the AC input signal in priority.

In other embodiments, when the AC input signal is within the preset power input threshold range, the control circuit 19 doesn't send the third control signal to the power factor correction circuit 13 to avoid unnecessary frequent regulation of switch states of the power factor correction circuit 13 caused by normal fluctuation of power input of the AC power source 101 and sends the third control signal to the power factor correction circuit 13 when the busbar power signal is not within the first threshold range to regulate the busbar power signal to the value within the first threshold range based on the third control signal. In addition, when the busbar power signal is within the preset power output threshold, i.e. within the first threshold range, the control circuit 19 doesn't regulate the first characteristic parameter of the first control signal and doesn't send the first control signal to the power factor correction circuit 13; when the AC input signal is not within the preset power input threshold and the busbar power signal is not within the preset power output threshold, the control circuit 19 regulates the third characteristic parameter of the third control signal based on the obtained AC input signal, sends the third control signal to the power factor correction circuit 13, but doesn't send the first control signal to the power factor correction circuit 13.

In an embodiment, the control circuit 19 obtains the power input signal from the power input conversion circuit 12 by sampling, calculates and regulates the fourth characteristic parameter of the fourth control signal sent to the power input conversion circuit 12 based on the power input signal; the power input conversion circuit 12 regulates the switch states of all internal switching tubes and/or switching contacts under the action of the fourth control signal to regulate the current output of the power input conversion circuit 12 to regulate the busbar power signal.

Wherein, the control circuit 19 sends the third control signal to the power factor correction circuit 13 with a higher priority than sending the fourth control signal to the power input conversion circuit 12, i.e. when the control circuit 19 obtains the AC input signal and the power input signal at the same time, specifically, the control circuit 19 regulates the third characteristic parameter of the third control signal based on the AC input signal and sends the third control signal to the power factor correction circuit 13 instead of sending the forth control signal to the power input conversion circuit 12.

In addition, the control circuit 19 sends the fourth control signal to the power input conversion circuit 12 with a higher priority than sending the second control signal, i.e. when the control circuit 19 obtains the power input signal and the busbar power signal at the same time, specifically, the control circuit 19 regulates the fourth characteristic parameter of the fourth control signal based on the power input signal and sends the fourth control signal to the power input conversion circuit 12 instead of sending the second control signal to the power factor correction circuit 12 to regulate the busbar power signal to the value within the first threshold range in a timely manner by responding to the change of the power input signal in priority.

From this, it can be inferred that when the control circuit 19 obtains the AC input signal, the power input signal and the busbar power signal at the same time, the priority of sending control signals to the power factor correction circuit 13 or the power input conversion circuit 12 is the third control signal, the fourth control signal, the first control signal and the second control signal. In addition, besides the function of only responding to the circuit output, i.e. feedback and regulation of the busbar power signal, the functions also include the control of the busbar power signal based on the power input, i.e. power output by the AC input signal and the power input signal. The control based on circuit input is prioritized. These functions effectively ensure the timeliness of power conversion and stability of power supply, improve the control efficiency and guarantee the optimization of the power conversion efficiency.

Besides, because the AC power source 101 and the standby power source 11 increase the power output at the beginning of the power supply until reaching the normal power output, the drive control based on the AC input signal and the power input signal also can regulate the power output more rapidly and more stably, and can effectively realize the soft start. Furthermore, when there are power supply fluctuations in the AC power source 101 and/or the standby power source 11, especially there is the surge peak current, the drive control based on the circuit input and the signal feedback based on the circuit output are combined to realize the surge protection in a timely manner to avoid damages of back-end circuits.

It is worth noting that because the multi-motor integrated power circuit 10 involves two power sources, i.e. the AC power source 101 and the standby power source 11, during regulating the voltage of the busbar 14, the current of the busbar power signal of the busbar 14 shall be regulated to balance the output power of the AC power source 101 and the standby power source 11. It should be noted that the above regulation of the busbar power signal based on the third control signal, the fourth control signal, the first control signal and the second control signal refer to voltage regulation.

In an embodiment, the control circuit 19 also obtains the busbar power signal current by sampling, i.e. the average current and the AC input signal current, gets a first difference, i.e. the difference between the busbar power signal current and the AC input signal current, and calculates and regulates a fifth characteristic parameter of a fifth control signal sent to the power factor correction circuit 13 based on the first difference; the power factor correction circuit 13 regulates the switch states of all internal switching tubes and/or switching contacts under the action of the fifth control signal to regulate the busbar power signal current.

Further, the control circuit 19 also obtains the power input signal current by sampling, gets a second difference, i.e. the difference between the busbar power signal current and the power input signal current, and calculates and regulates a sixth characteristic parameter of a six control signal sent to the power input conversion circuit 12 based on the second difference; the power input conversion circuit 12 regulates the switch states of all internal switching tubes and/or switching contacts under the action of the six control signal to regulate the busbar power signal current, and then dynamically regulates and balances the difference between the AC input signal current/the power input signal current and the busbar power signal current based on the difference feedback to avoid the AC input signal or the power input signal too high or too low so as to balance the output power of the AC power source 101 and the standby power source 11.

It is worth noting that the fifth control signal and the sixth control signal may be one or more reasonable control signals, such as PWM signals or PFM signals; the fifth characteristic parameter and the sixth characteristic parameter may be one or more reasonable parameters, such as duty cycle and frequency. Compared with the regulation of the busbar power signal voltage based on the third control signal, the fourth control signal, the first control signal and the second control signal, during regulation of the busbar power signal current based on the fifth control signal and the sixth control signal, the regulation amplitude of the fifth characteristic parameter and the sixth characteristic parameter is smaller and can be ignored, i.e. the impact of current regulation on voltage fluctuation of the busbar power signal is relatively small and can be ignored.

It should be understood that the control circuit 19 realizes dual optimization of busbar current through precise analysis of current difference and flexible control of signal regulation. On one hand, the power factor correction circuit 13 improves the power quality of the whole system. On the other hand, the power input conversion circuit 12 ensures the stability and efficiency of current supply through precise control.

In an embodiment, specifically, the third characteristic parameter of the third control signal regulated by the control circuit 19 based on the AC input signal is positively correlated with the AC input signal, i.e. when the AC input signal increases, the third characteristic parameter also increases correspondingly; while when the AC input signal reduces, the third characteristic parameter also reduces correspondingly.

From this, it can be inferred that when the AC input signal supplied by the AC power source 101 increases at the beginning, the third characteristic parameter, such as the duty cycle of PWM signal, can increase by responding to the increase of the AC input signal to quickly output the power from the power factor correction circuit 13, i.e. regulate the busbar power signal to the value within the first threshold range, and gradually regulate the increase amplitude of the power output of the power factor correction circuit 13 based on the increase amplitude of the AC input signal so as to effectively avoid the peak current; in addition, if there is surge peak current in the AC input signal, the duty cycle of the PWM signal can increase by responding to the peak current to quickly reduce the surge peak current, so as to realize surge protection in time and avoid damage of back-end circuits.

Similarly, specifically, the fourth characteristic parameter of the fourth control signal regulated by the control circuit 19 based on the power input signal is positively correlated with the power input signal, i.e. when the power input signal increases, the fourth characteristic parameter also increases correspondingly; while when the power input signal reduces, the fourth characteristic parameter also reduces correspondingly.

In an embodiment, the control circuit 19 also obtains the DC drive signal from every first power conversion circuit 17 sent to every DC motor 102 by sampling in real time, calculates and regulates a seventh characteristic parameter of a seventh control signal based on real-time data of every DC drive signal, and sends the seventh control signal to the first power conversion circuit 17; the first power conversion circuit 17 dynamically regulates its switch state based on the seventh control signal to ensure that voltage and/or current and/or frequency of every DC drive signal is(are) within a preset second threshold range.

It should be understood that the second threshold range is a reasonable voltage and/or current range set to meet the drive requirement of every DC motor 102 and maintain efficiency and stability of the system. When the DC drive signal is beyond the second threshold range, the control circuit 19 regulates the switch states of the first power conversion circuit 17 based on the seventh control signal to regulate the DC drive signal to the value within the second threshold range.

In some embodiments, the second threshold range is a voltage threshold range. The difference between the upper limit and the lower limit of the voltage threshold range is 6-12V, 10V is optimal, and the range is ±5V of targeted voltage output of the motor drive signal. There is no relevant limitation in this application.

Further, in an embodiment, the control circuit 19 also obtains the AC drive signal from every second power conversion circuit 18 sent to every AC motor 103 by sampling, calculates and regulates an eighth characteristic parameter of an eighth control signal based on real-time data of every AC drive signal, and sends the eighth control signal to the second power conversion circuit 18; the second power conversion circuit 18 dynamically regulates its switch state based on the eighth control signal to ensure that voltage and/or current and/or frequency of every AC drive signal is(are) within a preset third threshold range.

It should be understood that the third threshold range is a reasonable voltage and/or current and/or frequency range set to meet the drive requirement of every AC motor 103 and maintain efficiency and stability of the system. When the AC drive signal is beyond the third threshold range, the control circuit 19 regulates the switch state of the second power conversion circuit 18 based on the eighth control signal to regulate the AC drive signal to the value within the third threshold range.

Wherein, the control circuit 19 may regulate the AC drive signal by any reasonable closed-loop feedback regulation modes, such as speed loops and current loops, to ensure stable output of the second power conversion circuit 18 and improve the adaptability and reliability of drive control of every AC motor 103.

In some embodiments, the third threshold range is a voltage threshold range. The difference between the upper limit and the lower limit of the voltage threshold range is 6-12V, 10V is optimal, and the range is ± 5V of targeted voltage output of the motor drive signal. There is no relevant limitation in this application.

In some embodiments, specifically, the control circuit 19 may include one of any reasonable circuit units with signal processing function, such as a DSP, a MCU circuit, a CPU, a single-chip computer, a field programmable gate array, a programmable logic controller, a discrete gate or a transistor logic device and a piece of discrete hardware. There is no relevant limitation in this application.

It is worth noting that in order to optimize system efficiency and simplify control strategies and to ensure simplified and convenient of multi-motor control, the motor load with higher power is taken as the optimization control goal of efficiency, i.e. the busbar power signal voltage is set for the motor load with higher power as optimization control goal.

If two or more motor loads have the same power, the busbar power signal voltage shall be set for one load with highest use frequency and total power in a short period by comprehensive consideration of motor load use curve as the optimization control goal.

If two or more motor loads have the same power and their use power and frequency are totally the same, the busbar power signal voltage shall be set for any one as the optimization control goal.

It should be understood that in the aspect of control strategy, specifically, the control circuit 19 dynamically regulates the busbar power signal of the busbar 14 and the DC drive signal from the first power conversion circuit 17 and/or the AC drive signal from the second power conversion circuit 18 based on demands of real-time output power, load voltage and frequency and the output characteristic curve of the DC motor 102 and/or the AC motor 103 to ensure highest conversion efficiency and optimal control strategy of the first power conversion circuit 17 and/or the second power conversion circuit 18 and to realize efficient conversion drive and high dynamic regulation functions.

The first isolation circuit 15 and the isolation transformer 162 have the functions of electrical isolation and voltage conversion to electrically isolate the primary and secondary circuits, i.e. replace electrical connection with magnetic connection to avoid direct commission of electric signal by conductive pathway. Electromagnetic isolation avoids the direct transmission of potentially dangerous voltages and avoids the adverse effects of power grid directly driving the motor loads on the power supply stability and the user safety. In addition, the first AC signal is converted to the second AC signal.

In some specific embodiments, the first isolation circuit 15 and the second isolation circuit 16 realize electrical isolation and voltage matching of the primary side and the secondary side to meet the isolation requirements in safety regulation in the medical field in application scenarios that require high insulation between AC input and electrical safety regulation in a wide range of the AC voltage input, such as medical motor drive applications. The rear-stage first power conversion circuit 17 and the rear-stage second power conversion circuit 18 control the power output, i.e. control the voltage, current and frequency of the motor drive signal to output the motor drive. In general, the common motor drive control strategies are SVPWM, SPWM, DTC, FOC, etc. The control circuit 19 may regulate and control the current, voltage and frequency of the motor drive signal by any of above control strategies to meet the drive requirements of motor loads in different operating conditions and achieve efficient speed regulation and control of the motors.

For example, when the AC input signal from the AC power source 101 is 90Vac, to ensure efficient work of the multi-motor integrated power circuit 10, the power factor correction circuit 13 sets 370Vdc as the target voltage output and the rear-stage first power conversion circuit 17 and the rear-stage second power conversion circuit 18 are controlled stably by closed loop to ensure stable work of the motor in different load conditions and guarantee that the rear-stage first power conversion circuit 17 and the rear-stage second power conversion circuit 18 can output required voltage, current and frequency waveform.

During the period that the AC input signal increases from 90Vac to 220Vac, the control circuit 19 can gradually increase the duty cycle of the third control signal sent to the power factor correction circuit 13 by responding to the change of the AC input signal so as to slowly increase the power output, i.e. the busbar power signal, of the power factor correction circuit 13 to 390Vdc. The rear-stage first power conversion circuit 17 and the rear-stage second power conversion circuit 18 ensure stable work of motors in different load conditions by closed-loop feedback control and ensure that the rear-stage second power conversion circuit 18 can output required voltage, current and frequency waveform.

In other embodiments, specifically, the AC power source 101 may gradually increase the AC input signal to 264Vac from 220Vac, gradually increase the duty cycle of the third control signal during this process, gradually increase the busbar power signal to 410Vdc from 390Vdc, and set 5Vdc voltage return difference control to ensure stable and reliable drive control and meet the requirements of robustness.

From this, it can be inferred that to guarantee stable and reliable work of the multi-motor integrated power circuit 10, because the voltage ranges of the AC input signal are different, select 90Vac as the AC input voltage. 370Vde is set as the target voltage output, and the rear-stage first power conversion circuit 17 and the rear-stage second power conversion circuit 18 are set as closed-loop output to ensure to stably output the required voltage, current and frequency waveform in all load conditions with a view to ensuring stable and reliable operation of all motor loads.

Similarly, specifically, the standby power source 11 may gradually increase the power input signal to 264Vac from 220Vac, gradually increase the duty cycle of the fourth control signal during this process, gradually increase the busbar power signal to 410Vdc from 390Vdc, and set 5Vdc voltage return difference control to ensure stable and reliable drive control and meet the requirements of robustness.

In another embodiment, specifically, the target voltage input of the AC input signal and the power input signal may be any reasonable voltage between 90Vac and 264Vac, and the target voltage output of the power factor correction circuit 13 and the power input conversion circuit 12 may be any reasonable voltage between 370Vde and 410Vdc. The specific value is determined according to the application scenarios and the power supply standards of different countries and regions. There is no relevant limitation in this application.

Further, the standby power source 11 is connected with the busbar 14 by the first power conversion circuit 17 to form an improved multi-motor integrated power circuit 10. In case of power outage and failure of the AC power source 101, an upper computer or the control circuit 19 may shut down unimportant motor loads by corresponding second power conversion circuit 18 and only supply power normally to important devices. The standby power source 11 supplies power to important loads to ensure their normal operation when the AC power source 101 has an abnormality. In addition, in application scenarios without the AC power source 101, such as open countries, field hospitals and remote mountainous areas, the standby power source 11 can store energy to guarantee normal work of the system by utilizing the first power conversion circuit 17. If the standby power source 11 is a PV source, a wind source, a fuel battery or any other DC sources, the first power conversion circuit 17 is a bidirectional DC/DC converter and is used as a DC busbar of the system to ensure normal work of the whole system. Besides, when the standby power source 11 is an AC power source 101, the first power conversion circuit 17 may also be an AC/DC converter. There is no relevant limitation in this application.

Similarly, specifically, the target voltage input of the power input signal from the standby power source 11 may be any reasonable voltage between 90Vdc and 264Vdc, and the target voltage output of the first power conversion circuit 17 may be any reasonable voltage between 370Vde and 410Vdc. The specific value is determined according to the application scenarios and the power supply standards of different countries and regions. In addition, specifically, the standby power source 11 may also gradually increase the power input signal to 220Vde from 90Vdc or to 264Vdc from 220Vdc, gradually increase the duty cycle of the fourth control signal during this process, gradually increase the busbar power signal to 410Vdc from 390Vdc, and set 5Vdc voltage return difference control to ensure stable and reliable drive control and meet the requirements of robustness.

In another embodiment, because the drive control of motor loads is regular and predictable, specifically, the control circuit 19 may also have an AI control mechanism. Cloud or client AI control mechanism can optimize the control strategy of the control circuit 19 to optimize the rear-time demand of adaptive motor loads. For example, specifically, the control circuit 19 may also integrate with an AI chip, a deep network learning model and/or an AI algorithm network learning model to obtain one or more signal(s) among the AC input signal, the power input signal, the busbar power signal, the first AC signal, the second AC signal, the DC output signal and the drive signals of motors, and/or one or more parameter(s) among current ambient temperature, operation duration of the multi-motor integrated power circuit 10 and operation duration of motor loads by sampling in real time. AI control can optimize regulation, control and sending of one or more signals among the first control signal, the second control signal, the first drive signal and the second drive signal.

In above scheme, many circuits are integrated in one module, the same control circuit 19 can control the power factor correction circuit 13, the first power conversion circuit 17, the first switch sub-circuit 161 and every second power conversion circuit 18 to effectively reduce the redundancy of system hardware circuits, reduce implementation costs, lower down the complexity of the main power circuit and improve the reliability of the entire drive circuit. In addition, this scheme improves the reliability and efficiency of drive control, and can realize more accurate output timing logic control by timing control. The circuit is designed through comprehensive consideration and some unit circuits are multiplexed, which effectively reduces the system complexity and reduces the system circuit costs.

In an aspect of control strategies, to meet the requirements for application in global voltage range, the scheme dynamically regulates the busbar power signal of the busbar 14 to effectively ensure the optimal efficiency of circuits of the whole drive system and reach a goal of reducing losses. According to requirements for the power input signal, the AC input signal and the motor load drive characteristics, the scheme dynamically regulates the busbar power signal to ensure the optimal conversion efficiency of the whole motor drive system.

In addition, a plurality of independent control sub-circuits may be used, i.e. the MCU controller realizes drive of the front-stage converter and the rear-stage electric drive, or one MCU may be sampled to realize all control strategies, which improves the low reliability and low synchronization caused by delay of communication signal between modules, and improves the reliability of system control.

In an aspect of control precision, the interconnection of key signals among different control sub-circuits reduces the delay of information transmission among different control sub-circuits, thereby reducing interference caused by transmission of information among different control sub-circuits and significantly improving control progress and reliability of the system. Besides, the control circuit 19 is simplified. Only one control circuit 19 may be used to control in a unified way when the higher control speed is required, thereby effectively reducing the delay of signals in linked communication control of modules which results in low reliability and low synchronization, and further improving the reliability of the whole motor drive system.

The first power conversion circuit 17 combines the standby power source 11 and the AC power source 101 to a multi-motor integrated power circuit 10 and ensures stable and reliable work of the multi-motor integrated power circuit 10 in case of power outage of the AC power source 101, poor AC power quality or AC power failure to meet the demand of key motor loads for high reliability.

In the multi-motor integrated power circuit 10 with the standby power source 11 connected with the busbar 14 by the first power conversion circuit 17, the control circuit 19 can quickly shut off the common motor loads in power down of the AC input signal to maintain the normal power supply to important loads so as to provide enough time for the important loads to store data, thereby improving the power supply reliability of the system.

Besides, in application scenarios without the AC power source 101, such as field hospitals or field application scenarios, the standby power source 11 may supply power to all motor loads by utilizing the first power conversion circuit 17 to ensure stable and reliable operation of the multi-motor integrated power circuit 10 in open country or field environment without the AC power source 101.

The standby power source 11 may be a battery, an oil engine generator, a PV power interface, a wind power interface and many other energy forms. The new energy interfaces connect the standby power source 11 with the busbar 14 by utilizing the first power conversion circuit 17. The control circuit 19 realizes the unified control of system energy to reduce the system failure rate and improve the operation reliability of the system.

The control circuit 19 also can dynamically regulate the busbar power signal based on the voltage, current and frequency demand of all motor loads and can select an optimal working point between the operation stability and the optimal efficiency under the premise of meeting the demand of output power so as to ensure higher efficiency of power supply of the whole system. In addition, the dynamic regulation set value of the busbar power signal of the busbar 14 shall be determined with consideration of demand of controlling voltage and frequency of a plurality of motor loads. Finally, the busbar power signal is a demand of control strategy for all motor loads.

In application scenarios with higher requirements in safety regulations, in the aspect of control strategies, the control circuit 19 dynamically regulates the DC output signals from the first isolation circuit 15 and the second isolation circuit 16 according to requirements of motor loads for real-time output power, voltage and frequency and according to the output characteristic curve to ensure that the first isolation circuit 15, the second isolation circuit 16 and the rear-stage second power conversion circuit 18 have highest efficiency and optimal control strategies. Besides, the control circuit 19 realizes efficient transformation drive and high dynamic regulation function.

In application scenarios with lower requirements in safety regulations, in the aspect of control strategies, the control circuit 19 dynamically regulates the busbar power signals from the power factor correction circuit 13 and/or the first power conversion circuit 17 according to requirements of motor loads for real-time output power, voltage and frequency and according to the output characteristic curve to ensure that the rear-stage second power conversion circuit 18 has highest efficiency and optimal control strategies. Besides, the control circuit 19 realizes efficient transformation drive and high dynamic regulation function.

The front-stage power factor correction circuit 13 realizes the power factor correction of the AC input signal; the rear-stage first isolation circuit 15, the rear-stage second isolation circuit 16 and the rear-stage second power conversion circuit 18 realize electrical insulation and voltage matching. To drive a plurality of motor loads, and to ensure the system reliability and the independence of drive characteristics, the busbar 14 is connected with a plurality of rear-stage first isolation circuits 15 and rear-stage second isolation circuits 16 to realize electrical insulation and voltage matching. In general, the DC output voltage of the first isolation circuit 15 and the second isolation circuit 16, i.e. the DC output signal voltage, may be regulated within a certain voltage range according to the load demand. The regulated DC voltage is the input voltage of the rear-stage second power conversion circuit 18. The rear-stage second power conversion circuit 18 realizes controllable conversion of output voltage and frequency so as to drive a plurality of motor loads.

The busbar 14 is multiplexed, which reduces the system hardware costs. In addition, the first power conversion circuit 17 is connected with the busbar 14 and the control circuit 19 realizes the unified dispatching of system energy, which reduces redundant circuits in traditional UPS. Besides, the centralized control strategy reduces the delay in control and improves the control precision. It can be seen that compared with traditional strategies, the centralized control strategy reduces circuit transformation stages, simplifies the circuit structure and reduces system costs.

For the rear-end electrical devices of the whole system, i.e. motor loads, because the system control is regular and predictable, the control circuit 19 may also have an AI control mechanism. Cloud or client AI control mechanism can optimize the control strategy to optimize the rear-time demand of adaptive motor loads.

Referring to FIG. 2, FIG. 2 illustrates a structural schematic diagram of the second embodiment of the multi-motor integrated power circuit in this application. The difference between the multi-motor integrated power circuit in this embodiment and the first embodiment of the multi-motor integrated power circuit in this application is that specifically, the second power conversion circuit 28 of the multi-motor integrated power circuit 20 also includes a second switch sub-circuit 281 and an inverter circuit 282.

Wherein, the second switch sub-circuit 281 is coupled with the inverter circuit 282, the first isolation circuit 25 or one piece of secondary winding 2622, and the inverter circuit 282 is for coupling with the AC motor 103.

The second switch sub-circuit 281 receives the third drive signal from the control circuit 29, the isolation output signal from the first isolation circuit 25 or the second AC signal from one piece of secondary winding 2622 of the isolation transformer 162, and regulates the switch states of all internal switching tubes and/or switching contacts based on the third drive signal to convert the isolation output signal or the second AC signal to the second DC signal.

The inverter circuit 282 receives the second DC signal from the second switch sub-circuit 281 and the fourth drive signal from the control circuit 29, and regulates the switch states of all internal switching tubes and/or switching contacts under the action of the fourth drive signal to convert the second DC signal to the AC drive signal and supply the AC drive signal to the AC motor 103.

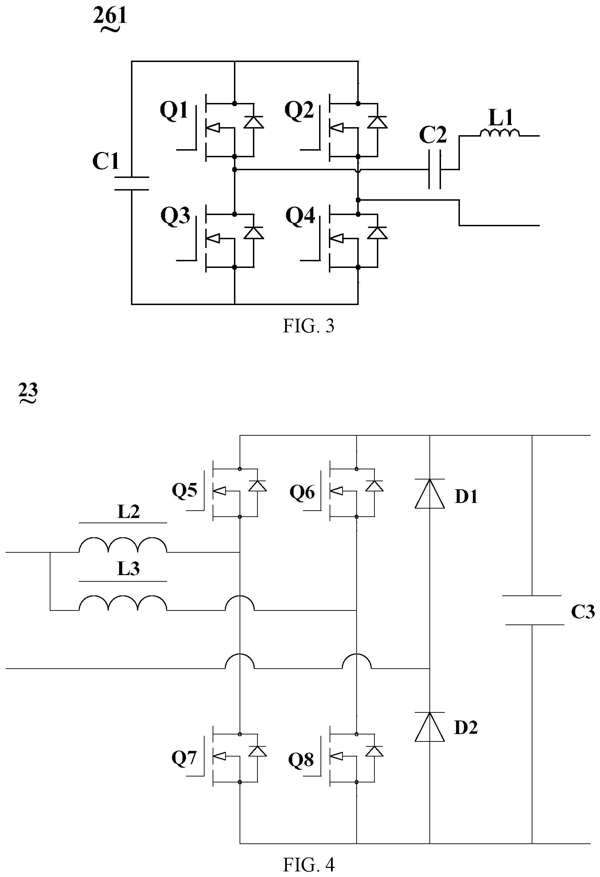

Referring to FIG. 3, FIG. 3 illustrates a structural schematic diagram of an embodiment of the first switch sub-circuit of the multi-motor integrated power circuit in FIG. 2.

In an embodiment, specifically, the first switch sub-circuit 261 may include a first capacitor C1, a first switching tube Q1, a second switching tube Q2, a third switching tube Q3, a fourth switching tube Q4, a second capacitor C2 and a first inductor L1.

Wherein, the first end of the first capacitor C1 is coupled with the first end of the power factor correction circuit 23, the first end of the first switching tube Q1 and the first end of the second switching tube Q2, the second end of the first capacitor C1 is coupled with the second end of the power factor correction circuit 23, the second end of the third switching tube Q3 and the second end of the fourth switching tube Q4, the second end of the first switching tube Q1 is coupled with the first end of the third switching tube Q3 and the first end of the second capacitor C2, the second end of the second switching tube Q2 is coupled with the first end of the fourth switching tube Q4 and the second end of the primary winding 2621, the second end of the second capacitor C2 is coupled with the first end of the first inductor L1, and the second end of the first inductor L1 is coupled with the first end of the primary winding 2621.

In other embodiments, specifically, the second capacitor C2 may be replaced by an electrical connection wire, i.e. remove the second capacitor C2 from the first switch sub-circuit 261, which may be determined based on the practical application scenarios. There is no relevant limitation in this application.

It should be understood that the third ends of the first switching tube Q1, the second switching tube Q2, the third switching tube Q3 and the fourth switching tube Q4 are coupled with the control circuit 29 to receive the first drive signal from the control circuit 29 and trigger ON or OFF under the action of the first drive signal to realize corresponding signal conversion.

In some embodiments, specifically, the first switching tube Q1, the second switching tube Q2, the third switching tube Q3, the fourth switching tube Q4 and all switching tubes mentioned below may be one or more of any reasonable switching devices, such as MOS tubes, triodes, SCRs and IGBTs. The third ends of all switching tubes are the control ends and can enable the first end and the second end when receiving the corresponding drive signals. There is no relevant limitation in this application.

Referring to FIG. 4, FIG. 4 illustrates a structural schematic diagram of the first embodiment of the power factor correction circuit of the multi-motor integrated power circuit in FIG. 2.

In an embodiment, specifically, the power factor correction circuit 23 also includes a second inductor L2, a third inductor L3, a fifth switching tube Q5, a sixth switching tube Q6, a seventh switching tube Q7, an eighth switching tube Q8, a first diode D1, a second diode D2 and a third capacitor C3; the first end of the second inductor L2 is coupled with the first end of the third inductor L3 and the first end of the AC power source 101, the second end of the second inductor L2 is coupled with the second end of the fifth switching tube Q5 and the first end of the seventh switching tube Q7, the second end of the third inductor L3 is coupled with the second end of the sixth switching tube Q6 and the first end of the eighth switching tube Q8, the first end of the first diode D1 is coupled with the second end of the second diode D2 and the second end of the AC power source 101, the first end of the fifth switching tube Q5 is coupled with the first end of the sixth switching tube Q6, the second end of the first diode D1 and the first end of the third capacitor C3, the second end of the seventh switching tube Q7 is coupled with the second end of the eighth switching tube Q8, the first end of the second diode D2 and the second end of the third capacitor C3.

Wherein, specifically, the third end of the seventh switching tube Q7 and the third end of the eighth switching tube Q8 are also coupled with the control circuit 29 to receive the first control signal from the control circuit 29 and trigger ON or OFF under the action of the first control signal to regulate the first DC signal.

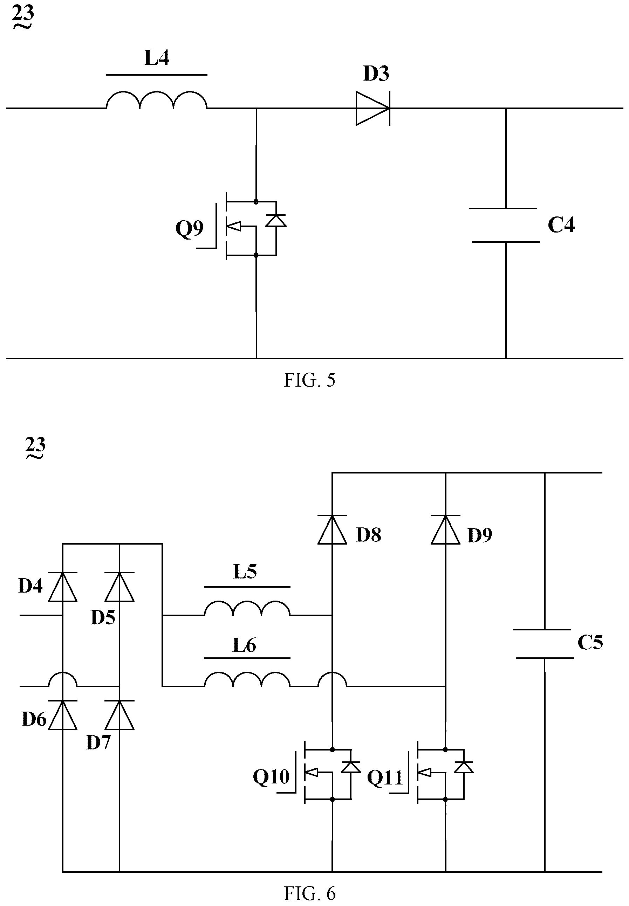

Referring to FIG. 5, FIG. 5 illustrates a structural schematic diagram of the second embodiment of the power factor correction circuit of the multi-motor integrated power circuit in FIG. 2.

In another embodiment, specifically, the power factor correction circuit 23 also includes a fourth inductor L4, a ninth switching tube Q9, a third diode D3 and a fourth capacitor C4; the first end of the fourth inductor L4 is coupled with the first end of the AC power source 101, the second end of the fourth inductor L4 is coupled with the first end of the ninth switching tube Q9 and the first end of the third diode D3, the second end of the third diode D3 is coupled with the first end of the fourth capacitor C4, and the second end of the ninth switching tube Q9 is coupled with the second end of the AC power source 101 and the second end of the fourth capacitor C4.

Wherein, specifically, the third end of the ninth switching tube Q9 is coupled with the control circuit 29 to receive the first control signal from the control circuit 29 and trigger ON or OFF under the action of the first control signal to regulate the first DC signal.

Referring to FIG. 6, FIG. 6 illustrates a structural schematic diagram of the third embodiment of the power factor correction circuit of the multi-motor integrated power circuit in FIG. 2.

In an embodiment, specifically, the power factor correction circuit 23 also includes a fourth diode D4, a fifth diode D5, a sixth diode D6, a seventh diode D7, a fifth inductor L5, a sixth inductor L6, an eighth diode D8, a ninth diode D9, a tenth switching tube Q10, an eleventh switching tube Q11 and a fifth capacitor C5.

Wherein, the first end of the fourth diode D4 is coupled with the second end of the sixth diode D6 and the first end of the AC power source 101, the second end of the fourth diode D4 is coupled with the second end of the fifth diode D5, the first end of the fifth inductor L5 and the first end of the sixth inductor L6, the first end of the fifth diode D5 is coupled with the second end of the seventh diode D7 and the second end of the AC power source 101, the first end of the sixth diode D6 is coupled with the first end of the seventh diode D7, the second end of the tenth switching tube Q10, the second end of the eleventh switching tube Q11 and the second end of the fifth capacitor C5, the second end of the fifth inductor L5 is coupled with the first end of the eighth diode D8 and the first end of the tenth switching tube, the second end of the sixth inductor L6 is coupled with the first end of the ninth diode D9 and the first end of the eleventh switching tube Q11, and the second end of the eighth diode D8 is coupled with the second end of the ninth diode D9 and the first end of the fifth capacitor C5.

It should be understood that specifically, the third end of the tenth switching tube Q10 and the third end of the eleventh switching tube Q11 are coupled with the control circuit 29 to receive the first control signal and/or the second control signal from the control circuit 29 and trigger ON or OFF under the action of the first control signal and/or the second control signal to regulate the first DC signal.

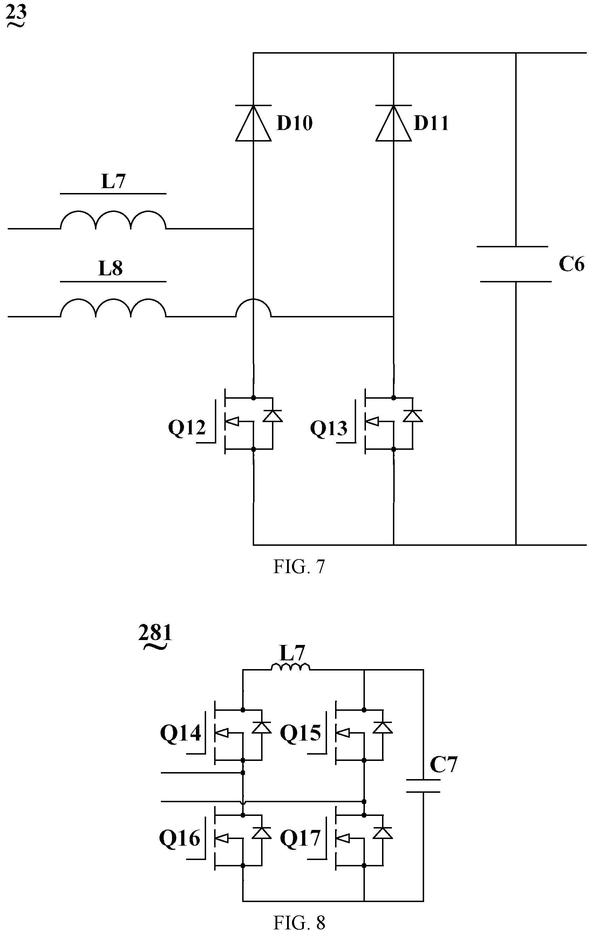

Referring to FIG. 7, FIG. 7 illustrates a structural schematic diagram of the fourth embodiment of the power factor correction circuit of the multi-motor integrated power circuit in FIG. 2.

In another embodiment, specifically, the power factor correction circuit 23 also includes a seventh inductor L7, an eighth inductor L8, a tenth diode D10, an eleventh diode D11, a twelfth switching tube Q12, a thirteenth switching tube Q13 and a sixth capacitor C6; the first end of the seventh inductor L7 is coupled with the first end of the AC power source 101, the second end of the seventh inductor L7 is coupled with the first end of the tenth diode D10 and the first end of the twelfth switching tube Q12, the first end of the eighth inductor L8 is coupled with the second end of the AC power source 101, the second end of the eighth inductor L8 is coupled with the first end of the eleventh diode D11 and the first end of the thirteenth switching tube Q13, the second end of the tenth diode D10 is coupled with the second end of the eleventh diode D11 and the first end of the sixth capacitor C6, and the second end of the twelfth switching tube Q12 is coupled with the second end of the thirteenth switching tube Q13 and the second end of the sixth capacitor C6.

Wherein, specifically, the third end of the twelfth switching tube Q12 and the third end of the thirteenth switching tube Q13 are also coupled with the control circuit 29 to receive the first control signal from the control circuit 29 and trigger ON or OFF under the action of the first control signal to regulate the first DC signal.

It should be understood that the power factor correction circuit 29 is mainly based on the single-phase power factor correction. If the AC power source 101 is a three-phase AC source, specifically, the power factor correction circuit 29 may also be a single boost chopper circuit, a dual boost circuit, a triple boost circuit, a three-phase Vienna Circuit and other reasonable circuits. The specific circuit shall be determined based on practical application scenarios. There is no relevant limitation in this application.

Referring to FIG. 8, FIG. 8 illustrates a structural schematic diagram of an embodiment of the second switch sub-circuit of the multi-motor integrated power circuit in FIG. 2.

In an embodiment, the second switch sub-circuit 281 includes a fourteenth switching tube Q14, a fifteenth switching tube Q15, a sixteenth switching tube Q16, a seventeenth switching tube Q17, a seventh inductor L7 and a seventh capacitor C7.

Wherein, the second end of the fourteenth switching tube Q14 is coupled with the third end of the primary winding 2621 and the first end of the sixteenth switching tube Q16, the second end of the fifteenth switching tube Q15 is coupled with the fourth end of the primary winding 2621 and the first end of the seventeenth switching tube Q17, the first end of the fourteenth switching tube Q14 is coupled with the first end of the seventh inductor L7, the second end of the seventh inductor L7 is coupled with the first end of the fifteenth switching tube Q15, the first end of the seventh capacitor C7 is coupled with the first end of the first power conversion circuit 27, and the second end of the sixteenth switching tube Q16 is coupled with the second end of the seventeenth switching tube Q17, the second end of the seventh capacitor C7 and the second end of the first power conversion circuit 27.

In other embodiments, specifically, the seventh inductor L7 may be replaced by an electrical connection wire, i.e. remove the seventh inductor L7 from the second switch sub-circuit 281, which may be determined based on the practical application scenarios. There is no relevant limitation in this application.

It should be understood that the third ends of the fourteenth switching tube Q14, the fifteenth switching tube Q15, the sixteenth switching tube Q16 and the seventeenth switching tube Q17 are coupled with the control circuit 29 to receive the second drive signal from the control circuit 29 and trigger ON or OFF under the action of the second drive signal to realize corresponding signal conversion.

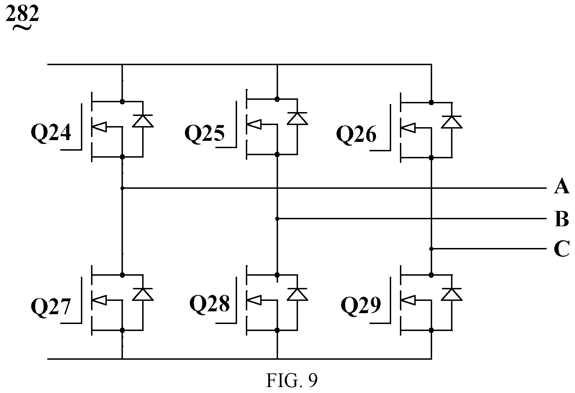

Referring to FIG. 9, FIG. 9 illustrates a structural schematic diagram of an embodiment of the inverter circuit of the multi-motor integrated power circuit in FIG. 2.

In an embodiment, specifically, the inverter circuit 282 also includes a twenty-fourth switching tube Q24, a twenty-fifth switching tube Q25, a twenty-sixth switching tube Q26, a twenty-seventh switching tube Q27, a twenty-eighth switching tube Q28 and a twenty-ninth switching tube Q29; the first end of the twenty-fourth switching tube Q24 is coupled with the first end of the twenty-fifth switching tube Q25 and the first end of the twenty-sixth switching tube Q26, the second end of the twenty-seventh switching tube Q27 is coupled with the second end of the twenty-eighth switching tube Q28 and the second end of the twenty-ninth switching tube Q29, the second end of the twenty-fourth switching tube Q24 is coupled with the first end of the twenty-seventh switching tube Q27 and the first end of the AC motor 103, the second end of the twenty-fifth switching tube Q25 is coupled with the first end of the twenty-eighth switching tube Q28 and the second end of the AC motor 103, and the second end of the twenty-sixth switching tube Q26 is coupled with the first end of the twenty-ninth switching tube Q29 and the third end of the AC motor 103.

Wherein, the third ends of the twenty-fourth switching tube Q24, the twenty-fifth switching tube Q25, the twenty-sixth switching tube Q26, the twenty-seventh switching tube Q27, the twenty-eighth switching tube Q28 and the twenty-ninth switching tube Q29 are coupled with the control circuit 29 to receive the third control signal from the control circuit 29 and trigger ON or OFF under the action of the third control signal to realize corresponding signal conversion.

Besides, specifically, the AC motor 103 is a three-phase motor. The first end, the second end and the third end of the AC motor 103 are corresponding to phase A, B and C of the three-phase motor.

It should be understood that specifically, the inverter circuit 282 is the end output circuit of the three-phase AC motor. When the AC motor 103 is a single-phase motor, specifically, the inverter circuit 282 may be a bridge circuit comprising four switching tubes, an ON-OFF circuit comprising a single switching tube and any other reasonable power output circuits. The specific circuit shall be determined according to the practical application scenarios. There is no relevant limitation in this application.

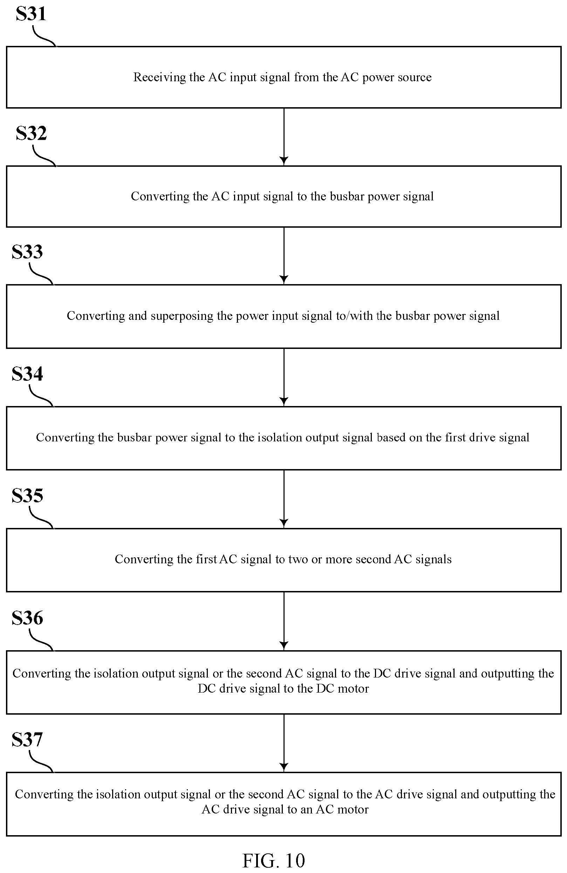

The embodiments of this application also provide a motor power control method. Referring to FIG. 10, FIG. 10 illustrates a process diagram of the first embodiment of the motor power control method in this application. Specifically, the method may include the following steps:
S31: receiving the AC input signal from the AC power source.

It should be understood that specifically, the motor power control method in this embodiment is a method to control the multi-motor integrated power circuit supplying power to the motor loads by utilizing the AC power source and the standby power source. Wherein, specifically, the multi-motor integrated power circuit includes a standby power source, a busbar, a power input conversion circuit, a power factor correction circuit, a first isolation circuit, a second isolation circuit, a first power conversion circuit(s), a second power conversion circuit(s) and a control circuit. The second isolation circuit includes a first switch sub-circuit and an isolation transformer. The isolation transformer includes one piece of primary winding and two or more pieces of secondary winding coupled with the primary winding. The power input conversion circuit is coupled between the standby power source and the busbar. The power factor correction circuit is coupled with the busbar and is for coupling with the AC power source. The first isolation circuit is coupled with the busbar. The first switch sub-circuit is coupled with the busbar and the primary winding. Every first power conversion circuit is coupled with the first isolation circuit or one piece of secondary winding and is for coupling with the DC motor. Every second power conversion circuit is coupled with the first isolation circuit or one piece of secondary winding and is for coupling with the AC motor. The control circuit is coupled with the power input conversion circuit, the power factor correction circuit, the first switch sub-circuit, every first power conversion circuit and every second power conversion circuit.

It is worth noting that the AC power source may be understood as a power grid AC power source or a power regulation circuit which converts and regulates the grid power to obtain AC power output.

Specifically, the power factor correction circuit receives the AC input signal from the external AC power source.

S32: converting the AC input signal to the busbar power signal.

The power factor correction circuit converts the AC input signal to the busbar power signal and outputs the busbar power signal to the busbar by electronic control technologies.

S33: converting and superposing the power input signal to/with the busbar power signal.

The first power conversion circuit receives the power input signal from the standby power source, converts the power input signal, outputs to the busbar, and superposes with the busbar power signal from the power factor correction circuit.

S34: converting the busbar power signal to the isolation output signal based on the first drive signal.

The first isolation circuit receives the first drive signal from the control circuit, changes the switch state under the action of the first drive signal and converts the busbar power signal to the isolation output signal.

S35: converting the first AC signal to two or more second AC signals.

Every first switch sub-circuit receives the busbar power signal from the busbar and the second drive signal from the control circuit, changes the switch state under the action of the second drive signal and converts the busbar power signal to the first AC signal.

The primary winding of the isolation transformer receives the first AC signal from the first switch sub-circuit. Two or more pieces of secondary winding convert the first AC signal to two or more second AC signals by electromagnetic induction.

S36: converting the isolation output signal or the second AC signals to the DC drive signal and outputting the DC drive signal to the DC motor.

Specifically, when coupling with the first isolation circuit, the first power conversion circuit receives the isolation output signal from the first isolation circuit, converts the isolation output signal to the DC drive signal and outputs the DC drive signal to the DC motor; when coupling with the secondary winding of the isolation transformer, the first power conversion circuit receives the second AC signal from the secondary winding, converts the second AC signal to the DC drive signal, and outputs the DC drive signal to the DC motor to drive the DC motor to work.

S37: converting the isolation output signal or the second AC signal to the AC drive signal and outputting the AC drive signal to the AC motor.

When coupling with the first isolation circuit, the second power conversion circuit receives the isolation output signal from the first isolation circuit, converts the isolation output signal to the AC drive signal and outputs the AC drive signal to the AC motor; when coupling with the secondary winding of the isolation transformer, the second power conversion circuit receives the second AC signal from the secondary winding, converts the second AC signal to the AC drive signal and outputs the AC drive signal to the AC motor to drive the AC motor to work.

It is worth noting that specifically, the first power conversion circuit and the second power conversion circuit may be coupled with the first isolation circuit or the secondary winding according to types or importance degrees of corresponding motor loads and other reasonable power supply scenarios, such as the first power conversion circuit and/or the second power conversion circuit connected with a DC motor are(is) coupled with the first isolation circuit; other first power conversion circuit and/or second power conversion circuit are(is) coupled with the secondary winding of the isolation transformer; or, important motor loads that require independent power supply, the first power conversion circuit and/or the second power conversion circuit coupled with a DC motor and/or an AC motor are coupled with the first isolation circuit, while other first power conversion circuit and/or other second power conversion circuit are coupled with the secondary winding of the isolation transformer. There is no relevant limitation in this application.

Further, in an embodiment, specifically, S34 may also be replaced by the following step: every first switch sub-circuit receives the busbar power signal from the busbar and the second drive signal from the control circuit, and changes the switch state under the action of the second drive signal to convert the busbar power signal to the first AC signal.

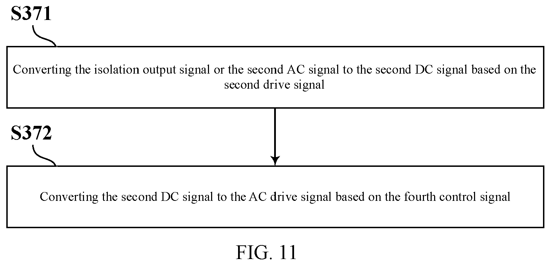

Referring to FIG. 11, FIG. 11 illustrates a process diagram of an embodiment of S37 in FIG. 10. In an embodiment, besides S31-S37, the motor power control method in this application also further includes some more specific steps. Specifically, S37 also includes the following steps:
S371: converting the isolation output signal or the second AC signal to the second DC signal based on the second drive signal.

It should be understood that the second switch sub-circuit receives the second drive signal from the control circuit and the isolation output signal from the first isolation circuit or the second AC signal from one piece of secondary winding of the isolation transformer and regulates the switch states of all internal switching tubes and/or switching contacts based on the third drive signal to convert the isolation output signal or the second AC signal to the second DC signal.

S372: converting the second DC signal to the AC drive signal based on the fourth control signal.

The inverter circuit receives the second DC signal from the second switch sub-circuit and the fourth drive signal from the control circuit, and regulates the switch states of all internal switching tubes and/or switching contacts based on the fourth drive signal to convert the second DC signal to the AC drive signal and output the AC drive signal to the AC motor.

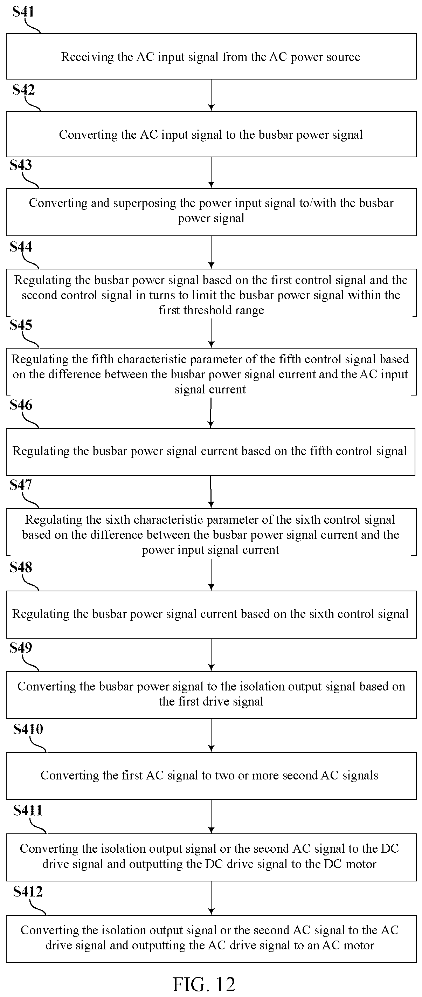

Referring to FIG. 12, FIG. 12 illustrates a process diagram of the second embodiment of the motor power control method in this application. The motor power control method in this embodiment is a process diagram of a detailed embodiment of the motor power control method in FIG. 10 and specifically includes the following steps:
S41: receiving the AC input signal from the AC power source.
S42: converting the AC input signal to the busbar power signal.
S43: converting and superposing the power input signal to/with the busbar power signal.
   Wherein, S41, S42 and S43 are same with S31, S32 and S33 in FIG. 11. Refer to S31, S32, S33 and relevant text. There is no more description herein.
S44: regulating the busbar power signal based on the first control signal and the second control signal in turns to limit the busbar power signal within the first threshold range.

The control circuit obtains the busbar power signal of the busbar by sampling and regulates the first characteristic parameter of the first control signal sent to the power factor correction circuit based on the busbar power signal; the power factor correction circuit regulates the switch states of all internal switching tubes and/or switching contacts under the action of the first control signal to regulate the current output of the power factor correction circuit so as to regulate the busbar power signal.

Further, the control circuit also obtains the busbar power signal regulated by the power factor correction circuit by sampling, calculates and regulates the second characteristic parameter of the second control signal sent to the power input conversion circuit based on the real-time data of the regulated busbar power signal; the power input conversion circuit regulates the switch states of all internal switching tubes and/or switching contacts under the action of the second control signal to regulate the current output of the power input conversion circuit so as to regulate the busbar power signal again.

Wherein, the control circuit dynamically regulates the busbar power signal based on the first control signal and the second control signal in turns to limit the voltage and/or current and/or frequency of the busbar power signal within a preset first threshold range to meet the drive demands of motor loads in different working conditions.

It should be understood that the first threshold range is a reasonable voltage and/or current and/or frequency range to prevent the rear-end circuits from damage in over-voltage or over-current conditions and to maintain efficiency and stability of the system. When the busbar power signal is beyond the first threshold range, the control circuit regulates the switch states of the power factor correction circuit and the power input conversion circuit based on the first control signal and the second control signal to regulate the busbar power signal to the value within the first threshold range.

The control circuit sends the first control signal with higher priority than sending the second control signal. When the busbar power signal is beyond the first threshold range, the control circuit firstly sends the first control signal to the power factor correction circuit to regulate the busbar power signal and judges whether the regulated busbar power signal is within the first threshold range. If yes, the control circuit doesn't send the second control signal; if no, the control circuit sends the second control signal to the power input conversion circuit to regulate the busbar power signal again, and judges whether the current busbar power signal is within the first threshold range. If yes, the regulation of the busbar power signal is completed; if no, the control circuit sends the first control signal to the power factor correction circuit to regulate the busbar power signal, and so on. The control circuit dynamically regulates the busbar power signal based on the first control signal and the second control signal in turns until the busbar power signal is within the first threshold range.

It should be noted that before sending the first control signal to the power factor correction circuit, specifically, the control circuit also calculates and regulates the first characteristic parameter of the first control signal based on the obtained busbar power signal. Similarly, before sending the second control signal to the power input conversion circuit, specifically, the control circuit also calculates and regulates the second characteristic parameter of the second control signal based on the obtained busbar power signal.

In some embodiments, specifically, the first control signal and the second control signal may be one or more reasonable control signals, such as a PWM signal or a PFM signal. There is no relevant limitation in this application.

In some embodiments, specifically, the first characteristic parameter and the second characteristic parameter may be one or more reasonable parameters, such as duty cycle and frequency. The switch states of above switching tubes and/or switching contacts are corresponding to time ratio and/or switching frequency of ON and OFF. There is no relevant limitation in this application.

From this, it can be inferred that the control circuit forms a closed-loop control system by real-time monitoring, analysis and sending and receiving instructions to ensure stable output of the busbar power signal of the busbar, optimize the overall voltage conversion efficiency and power supply stability and enhance adaptability and reliability.

In some embodiments, the first threshold range is a voltage threshold range. The difference between the upper limit and the lower limit of the voltage threshold range is 6-12V, 10V is optimal, and the range is ± 5V of targeted voltage output of the busbar power signal. There is no relevant limitation in this application.

S45: regulating the fifth characteristic parameter of the fifth control signal based on the difference between the busbar power signal current and the AC input signal current.

The control circuit obtains the busbar power signal current by sampling, i.e. the average current and the AC input signal current, gets a first difference, i.e. the difference between the busbar power signal current and the AC input signal current, and calculates and regulates the fifth characteristic parameter of the fifth control signal sent to the power factor correction circuit based on the first difference; the power factor correction circuit regulates the switch states of all internal switching tubes and/or switching contacts under the action of the fifth control signal to regulate the busbar power signal current.

S46: regulating the busbar power signal current based on the fifth control signal.

The power factor correction circuit also receives the fifth control signal and regulates the switch states of all internal switching tubes and/or switching contacts under the action of the fifth control signal to regulate the busbar power signal current.

S47: regulating the sixth characteristic parameter of the sixth control signal based on the difference between the busbar power signal current and the power input signal current.

The control circuit also obtains the power input signal current by sampling, gets a second difference, i.e. the difference between the busbar power signal current and the power input signal current, and calculates and regulates the sixth characteristic parameter of the six control signal sent to the power input conversion circuit based on the second difference;
S48: regulating the busbar power signal current based on the sixth control signal.

The power input conversion circuit also receives the sixth control signal, regulates the switch states of all internal switching tubes and/or switching contacts under the action of the sixth control signal to regulate the busbar power signal current, and then dynamically regulates and balances the difference between the AC input signal current/the power input signal current and the busbar power signal current based on the difference feedback to avoid the AC input signal or the power input signal too high or too low so as to balance the output power of the AC power source and the standby power source.

S49: converting the busbar power signal to the isolation output signal based on the first drive signal.

S410: converting the first AC signal to two or more second AC signals.

S411: converting the isolation output signal or the second AC signals to the DC drive signal and outputting the DC drive signal to the DC motor.

S412: converting the isolation output signal or the second AC signals to the AC drive signal and outputting the AC drive signal to the AC motor.

Wherein, S49, S410, S411 and S412 are same with S34, S35, S36 and S37 in FIG. 11. Refer to S34, S35, S36, S37 and relevant text. There is no more description herein.

It should be understood that in some other embodiments, specifically, the multi-motor integrated power circuit also includes some more specific circuit units to realize other more specific motor power control methods. Refer to FIG. 1-9 and relevant text. There is no more description herein.

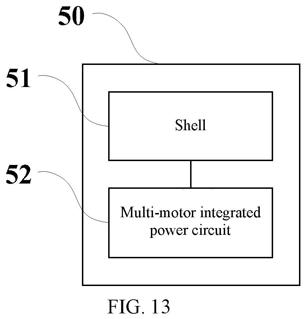

Embodiments of this application also provide an electronic device. Refer to FIG. 13, FIG. 13 illustrates a framework diagram of an embodiment of the electronic device in this application. In this embodiment, the electronic device 50 includes a shell 51 and a multi-motor integrated power circuit 52 connected with the shell 51.

In some embodiments, specifically, the electronic device 50 may be any reasonable power supply device of mechanical devices integrated with motors, such as a medical motor device or an industrial manufacturing device. There is no relevant limitation in this application.

It should be noted that the multi-motor integrated power circuit 52 in this embodiment is the multi-motor integrated power circuit 10 or the multi-motor integrated power circuit 20 in any of above embodiments. Refer to FIG. 1-9 and relevant text. There is no more description herein.

The beneficial effects of this application are that different from the prior art, the power input conversion circuit of the multi-motor integrated power circuit in this application converts the power input signal from the standby power source to the busbar power signal; the power factor correction circuit converts and superposes the AC input signal from the AC power source to/with the busbar power signal; the first isolation circuit converts the busbar power signal to the isolation output signal; the first switch sub-circuit converts the busbar power signal to the first AC signal; the isolation transformer converts the first AC signal to two or more second AC signals; the first power conversion circuit or the isolation transformer converts the isolation output signal or the second AC signals to the DC drive signal and outputs the DC drive signal to the DC motor; the second power conversion circuit converts the isolation output signal or the second AC signal to the AC drive signal and outputs the AC drive signal to the AC motor. These circuits are integrated in one module and the power factor correction circuit and the control circuit are multiplexed, which effectively simplifies system hardware circuits and improves reliability of drive control and power supply. In addition, the centralized control strategy reduces the control delay, improves the control precision, simplifies the circuit structures and reduces the system costs. The standby power source and the AC power source are combined into a composite power source, and are controlled by the power input conversion circuit and the power factor correction circuit in a unified way, which effectively reduces the system failure rate and improves the system reliability. Therefore, motor loads can work stably and reliably to meet the high reliability power demand of key motor loads in outage, failure or missing of the AC power source, such as in an open country or field environment. Furthermore, compared with the structure that every motor load is equipped with an independent isolation transformer, the multi-winding transformer for similar motor loads further improves the integration degree of the multi-motor integrated power circuit and simplifies the drive control of the control circuit. The isolation transformer realizes electrical isolation and voltage matching on primary and secondary sides to meet relevant insulation requirements in safety regulation.

The above content is only the embodiments in this application and constitutes no limitation to the scope of the patent in this application. Any equivalent structure or equivalent process transformation made by reference of the specification and the drawings in this application, or direct or indirect application in other related technical fields are included in the protection scope of the patent of this application.

## Claims

1. A multi-motor integrated power circuit, wherein, the multi-motor integrated power circuit comprises:
a standby power source;
a busbar;
a power input conversion circuit coupled between the standby power source and the busbar to receive a power input signal from the standby power source, convert the power input signal to a busbar power signal and output the busbar power signal to the busbar;
a power factor correction circuit coupled with the busbar and for coupling with an AC power source to receive an AC input signal from the AC power source and convert and superpose the AC input signal to/with the busbar power signal;
a first isolation circuit coupled with the busbar;
a second isolation circuit which comprises a first switch sub-circuit and an isolation transformer, of which the isolation transformer comprises one piece of primary winding and two or more pieces of secondary winding coupled with the primary winding and the first switch sub-circuit is coupled with the busbar and the primary winding;
a first power conversion circuit(s) of which every first power conversion circuit is coupled with the first isolation circuit or one piece of secondary winding and for coupling with a DC motor;
a second power conversion circuit(s) of which every second power conversion circuit is coupled with the first isolation circuit or one piece of secondary winding and for coupling with an AC motor;
a control circuit coupled with the power input conversion circuit, the power factor correction circuit, the first switch sub-circuit, every first power conversion circuit and every second power conversion circuit;
wherein, the first isolation circuit receives a first drive signal from the control circuit and converts the busbar power signal to an isolation output signal based on the first drive signal; every first switch sub-circuit receives the busbar power signal from the busbar and a second drive signal from the control circuit, and converts the busbar power signal to a first AC signal based on the second drive signal; the primary winding receives the first AC signal from the first switch sub-circuit, and two or more pieces of secondary winding convert the first AC signal to two or more second AC signals; every first power conversion circuit receives the isolation output signal from the first isolation circuit or the second AC signal from every piece of secondary winding, converts the isolation output signal or the second AC signal to a DC drive signal and outputs the DC drive signal to the DC motor; every second power conversion circuit receives the isolation output signal from the first isolation circuit or the second AC signal from every piece of secondary winding, converts the isolation output signal or the second AC signal to an AC drive signal and outputs the AC drive signal to the AC motor.

2. The multi-motor integrated power circuit according to claim 1, wherein,
the control circuit obtains the busbar power signal by sampling, regulates a first characteristic parameter of a first control signal based on the busbar power signal, and sends the first control signal to the power factor correction circuit to regulate the busbar power signal based on the first control signal; the control circuit regulates a second characteristic parameter of a second control signal based on the regulated busbar power signal and sends the second control signal to the power input conversion circuit to regulate the busbar power signal based on the second control signal; wherein, the control circuit regulates the busbar power signal based on the first control signal and the second control signal in turns to limit the busbar power signal within a first threshold range;
the control circuit obtains the AC input signal by sampling, regulates a third characteristic parameter of a third control signal based on the AC input signal, and sends the third control signal to the power factor correction circuit to regulate the busbar power signal based on the third control signal; wherein, the control circuit sends the third control signal to the power factor correction circuit with a higher priority than sending the first control signal; and
the control circuit obtains the power input signal by sampling, regulates a fourth characteristic parameter of a fourth control signal based on the power input signal, and sends the fourth control signal to the power input conversion circuit to regulate the busbar power signal based on the fourth control signal; wherein, the control circuit sends the third control signal to the power factor correction circuit with a higher priority than sending the fourth control signal to the power input conversion circuit and the control circuit sends the fourth control signal to the power input conversion circuit with a higher priority than sending the second control signal.

3. The multi-motor integrated power circuit according to claim 1, wherein,
the control circuit regulates a fifth characteristic parameter of a fifth control signal based on the difference between the busbar power signal current and the AC input signal current, and sends the fifth control signal to the power factor correction circuit to regulate the busbar power signal current based on the fifth control signal; and
the control circuit regulates a sixth characteristic parameter of a sixth control signal based on the difference between the busbar power signal current and the power input signal current, and sends the sixth control signal to the power input conversion circuit to regulate the busbar power signal current based on the sixth control signal.

4. The multi-motor integrated power circuit according to claim 1, wherein,
the second power conversion circuit also comprises a second switch sub-circuit and an inverter circuit; the second switch sub-circuit is coupled with the inverter circuit and the first isolation circuit or the secondary winding; the inverter circuit is for coupling with the AC motor;
wherein, the second switch sub-circuit receives a third drive signal from the control circuit and the isolation output signal from the first isolation circuit or the second AC signal from the secondary winding, and converts the isolation output signal or the second AC signal to a second DC signal based on the third drive signal; the inverter circuit receives the second DC signal from the second switch sub-circuit and a fourth drive signal from the control circuit and converts the second DC signal to the AC drive signal based on the fourth drive signal.

5. The multi-motor integrated power circuit according to claim 1, wherein,
the first switch sub-circuit comprises a first capacitor, a first switching tube, a second switching tube, a third switching tube, a fourth switching tube, a second capacitor and a first inductor;
wherein, the first end of the first capacitor is coupled with the first end of the busbar, the first end of the first switching tube and the first end of the second switching tube, the second end of the first capacitor is coupled with the second end of the busbar, the second end of the third switching tube and the second end of the fourth switching tube, the second end of the first switching tube is coupled with the first end of the third switching tube and the first end of the second capacitor, the second end of the second switching tube is coupled with the first end of the fourth switching tube and the second end of the primary winding, the second end of the second capacitor is coupled with the first end of the first inductor, and the second end of the first inductor is coupled with the first end of the primary winding; and
the third ends of the first switching tube, the second switching tube, the third switching tube and the fourth switching tube are coupled with the control circuit.

6. The multi-motor integrated power circuit according to claim 1, wherein,
the power factor correction circuit comprises a second inductor, a third inductor, a fifth switching tube, a sixth switching tube, a seventh switching tube, an eighth switching tube, a first polar tube, a second polar tube and a third capacitor;
wherein, the first end of the second inductor is coupled with the first end of the third inductor and the first end of the AC power source, the second end of the second inductor is coupled with the second end of the fifth switching tube and the first end of the seventh switching tube, the second end of the third inductor is coupled with the second end of the sixth switching tube and the first end of the eighth switching tube, the first end of the first polar tube is coupled with the second end of the second polar tube and the second end of the AC power source, the first end of the fifth switching tube is coupled with the first end of the sixth switching tube, the second end of the first polar tube and the first end of the third capacitor, the second end of the seventh switching tube is coupled with the second end of the eighth switching tube, the first end of the second polar tube and the second end of the third capacitor, and the third end of the seventh switching tube and the third end of the eighth switching tube are coupled with the control circuit.

7. A motor power control method, wherein, the motor power control method comprises:
receiving the AC input signal from the AC power source;
converting the AC input signal to the busbar power signal;
converting and superposing the power input signal to/with the busbar power signal;
converting the busbar power signal to the isolation output signal based on the first drive signal;
or, converting the busbar power signal to the first AC signal based on the second drive signal;
converting the first AC signal to two or more second AC signals;
converting the isolation output signal or the second AC signals to the DC drive signal and outputting the DC drive signal to the DC motor; and
converting the isolation output signal or the second AC signal to the AC drive signal and outputting the AC drive signal to the AC motor.

8. The motor power control method according to claim 7, wherein, a step after converting and superposing the power input signal to/with the busbar power signal and before converting the busbar power signal to the isolation output signal based on the first drive signal also comprises:
regulating the busbar power signal based on the first control signal and the second control signal in turns to limit the busbar power signal within the first threshold range; wherein, the step of regulating the busbar power signal based on the first control signal and the second control signal comprises: regulating the first characteristic parameter of the first control signal based on the busbar power signal; regulating the second characteristic parameter of the second control signal based on the regulated busbar power signal;
regulating the fifth characteristic parameter of the fifth control signal based on the difference between the busbar power signal current and the AC input signal current;
regulating the busbar power signal current based on the fifth control signal;
regulating the sixth characteristic parameter of the sixth control signal based on the difference between the busbar power signal current and the power input signal current; and
regulating the busbar power signal current based on the sixth control signal.

9. The motor power control method according to claim 7, wherein, the step of converting the isolation output signal or the second AC signals to the AC drive signal comprises:
converting the isolation output signal or the second AC signals to the second DC signal based on the second drive signal; and
converting the second DC signal to the AC drive signal based on the fourth control signal.

10. An electronic device, wherein, the electronic device comprises a shell and a multi-motor integrated power circuit;
wherein, the multi-motor integrated power circuit is the one in claim 1.
